# FASCICULE DE BREVET EUROPEEN

(11) **EP 0 992 867 B1**
(45) Date de publication et mention de la délivrance du brevet: **31.08.2005**
(21) Numéro de dépôt: 99402484.2
(22) Date de dépôt: 08.10.1999
(51) Int. Cl.: G05B 19/05, G05B 19/418

(54) **Système d'automatisme distribué**
Verteiltes Automatisierungssystem
Distributed automation system

(30) Priorité: 08.10.1998 FR 9812907
(43) Date de publication de la demande: 12.04.2000
(73) Titulaire: Schneider Automation, 06560 Valbonne (FR)
(72) Inventeur: Bonet, Jacques, 06600 Antibes (FR); Brault, Gilbert, 06140 Vence (FR); Chauvet, Antonio, 06560 Valbonne (FR); Tixador, Jean-Marc, 06270 Villeneuve-Loubet (FR)

(56) Documents cités:
- EP-A- 0 597 561
- EP-A- 0 825 506
- DE-A- 19 615 190
- DE-U- 29 600 609
- US-A- 4 949 299
- US-A- 5 805 442
- ERKES J W ET AL: "IMPLEMENTING SHARED MANUFACTURING SERVICES ON THE WORLD-WIDE WEB" COMMUNICATIONS OF THE ASSOCIATION FOR COMPUTING MACHINERY,US,ASSOCIATION FOR COMPUTING MACHINERY. NEW YORK, vol. 39, no. 2, 1 février 1996 (1996-02-01), pages 34-45, XP000585177 ISSN: 0001-0782
- FUHR P L ET AL: "REMOTE INTERROGATION AND CONTROL OF SENSORS VIA THE INTERNET" SENSORS,US,HELMERS PUBLISHING, vol. 12, no. 12, 1 décembre 1995 (1995-12-01), pages 25-29,31, XP002050471 ISSN: 0746-9462

## Description

La présente invention concerne un système d'automatisme distribué comprenant un automate programmable équipé d'une unité centrale capable d'exécuter un programme en langage d'automation et d'un coupleur pouvant communiquer grâce à une fonction serveur avec les équipements associés sous le protocole TCP/IP et pourvu d'une mémoire de masse contenant des objets logiciels dits "à variables automates" qui gèrent l'accès aux variables automates.

Traditionnellement, un système d'automation est segmenté en plusieurs niveaux. Au niveau inférieur on trouve le bus des capteurs/actionneurs qui permet les échanges entre les automates programmables ou commandes numériques et les capteurs et actionneurs qui leur sont associés. A un niveau supérieur on trouve un bus de type informatique reliant les ordinateurs chargés de la supervision et du système d'information du site de production. A un niveau intermédiaire on trouve des bus qui font la jonction entre les niveaux précédents. Cet ensemble est donc hétérogène.

Il est connu d'utiliser le protocole TCP/IP et les logiciels adaptés à ce protocole pour faire communiquer sur différents niveaux, via un bus de type Ethernet par exemple, les équipements d'un réseau d'automatisme. Les automates programmables sont alors équipés d'un module ou coupleur TCP/IP. Cette solution permet de fédérer différents niveaux.

Le langage Java est envisagé pour les automatismes à différents niveaux par exemple au niveau de la gestion de la supervision et de la gestion de production. On se référera par exemple aux articles parus dans CiMax de Mai-juin 97 ou dans Mesures de Mai 98. Ce langage Java présente des avantages concernant la portabilité et l'orientation objet ainsi que la possibilité d'exécuter dans le navigateur d'un poste local des programmes écrits en Java dits "applets" et importés à travers le réseau.

La présente invention a pour but de fournir une plate-forme matérielle et logicielle rendant l'automate programmable actif sur un réseau de type Intranet ou ses extensions par manipulation et/ou production d'information de niveau manufacturier, c'est à dire "non impliquées" directement dans le contrôle commande temps réel et définissant un modèle objet adapté à la structure actuelle des automatismes. Elle permet d'intégrer les automates programmables industriels au système d'information de l'entreprise sans remettre en cause la structure des automatismes. Ceci répond au besoin croissant d'intégration des équipements de l'outil de production et des systèmes de gestion (Superviseurs, Système automatisé de production, etc..).

Le système selon l'invention est essentiellement caractérisé par le fait qu'il comporte des objets logiciels dits "manufacturiers" transformant les informations des objets à variables automates en information de type manufacturier exploitables par les équipements associés, chacun de ces objets étant constitué d'un objet serveur localisé sur le coupleur serveur et d'un objet client qui est l'image de l'objet serveur, l'objet serveur étant localisé sur une pluralité de stations clientes.

L'invention va maintenant être décrite en se référant à un mode de réalisation donné à titre d'exemple et représenté par les dessins annexés sur lesquels :
- la figure 1 est un schéma de système d'automatisme distribué;
- la figure 2 est schéma de l'architecture logicielle du coupleur serveur équipant un automate selon l'invention;
- la figure 3 illustre les échanges entre différents objets logiciels du système d'automatisme distribué ;
- la figure 4 illustre la mise à jour du serveur de noms du coupleur serveur en cas de modification du programme automate par un atelier de programmation;
- la figure 5 illustre des échanges entre différents objets logiciels.

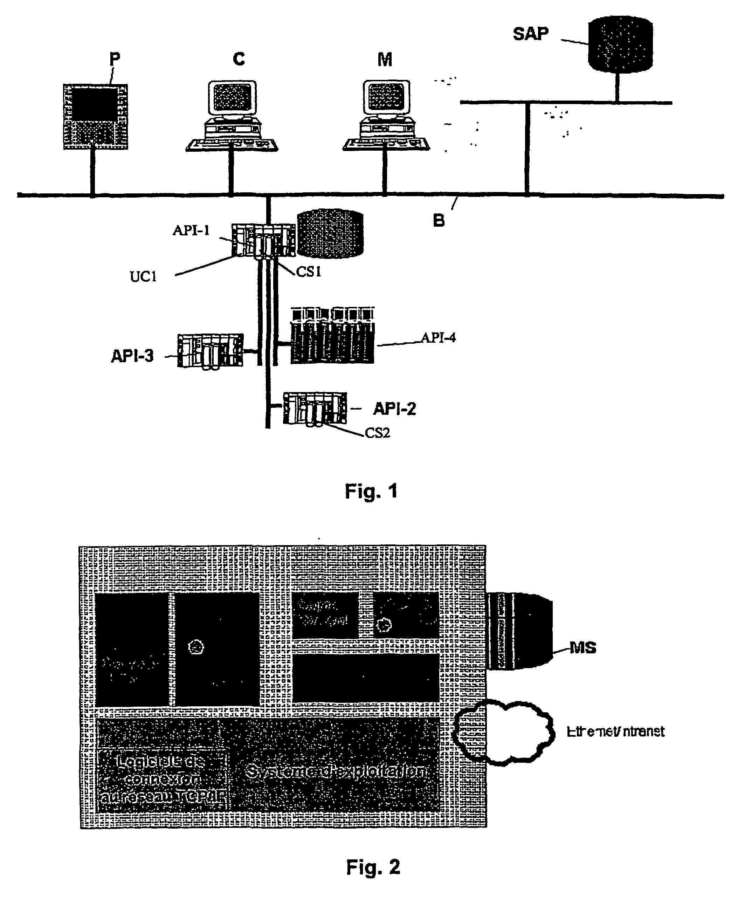

L'architecture représentée à la figure 1 comporte un automate référencé API-1 équipé d'une unité centrale. Cet automate communique avec d'autres automates programmables API-2, API-3, API-4 ainsi qu'avec des équipements associés SAP, M, C, P. L'automate API-1 est équipé d'un coupleur serveur CS1 qui va être décrit ci-dessous, l'automate API-2 étant également équipé d'un coupleur serveur repéré CS2.

L'unité centrale de chaque automate programmable contient un programme d'application PAP qui est écrit dans un langage d'automation habituel ("ladder", etc..) et gère les entrées-sorties en utilisant des variables de contrôle commande en temps réel dites variables automates qui sont repérées VAR.

Le coupleur à fonction serveur CS1 de l'automate programmable API-1 communique par le bus fond de panier avec l'unité centrale UC1 de l'automate sur lequel il est monté et avec les autres coupleurs de cet automate. L'automate API-1 équipé du coupleur CS1 peut communiquer par l'intermédiaire par exemple d'un coupleur avec les autres automates programmables référencés API-2, API-3, API-4. Le coupleur serveur CS1 est pourvu d'un connecteur lui permettant de communiquer par un bus B, sous le protocole TCP/IP, avec les équipements associés tels que le serveur de gestion de production SAP, un terminal de dialogue P ou des ordinateurs C et M.

En se référant à la figure 2, chaque coupleur serveur CS1 ou CS2 supporte un système d'exploitation temps réel JAVA, une machine virtuelle qui interprète le "byte-code" JAVA (code intermédiaire obtenu après précompilation par un compilateur JAVA). Une des fonctions de ce système d'exploitation est d'assurer la connexion du coupleur CS1 au réseau de type TCP/IP. Chaque coupleur CS1 ou CS2 est pourvu d'une mémoire de masse MS et d'un microprocesseur.

Le coupleur à fonction serveur CS1 de l'automate API-1 contient dans sa mémoire MS d'une part des objets logiciels dits » à variables automates » référencés OV qui gèrent l'accès aux variables automates VAR et d'autre part des objets logiciels dits « manufacturiers » référencés OM. Ce coupleur CS1 supporte un serveur de gestion d'un ensemble de pages de type HTML permettant la "gestion" du coupleur, en particulier l'affichage de l'état du coupleur (Marche, Arrêt, erreur) et la modification de cet état des objets OM et OV du coupleur (Marche, Arrêt, erreur) et la modification de cet état.

Un objet manufacturier OM peut facilement être "connecté" à différents types d'objets OV et donc différents types de protocoles ce qui permet l'adaptation du coupleur CS1 à tous les types de protocoles industriels. Un objet OM1-S qui est exécuté sur le coupleur CS1 de l'automate API-1 peut consommer des informations produites par d'autres objets OV-3 ou OM-2 exécutés sur un coupleur serveur CS2 embarqué dans l'automate API-2.

Les objets OV " à variables automates " peuvent lire ou écrire les valeurs de une ou à plusieurs variables automates VAR en utilisant les protocoles de contrôle industriel. Ils transmettent les valeur des variables automates aux objets OM en fonction du type de la variable automate et ou en fonction des besoins.

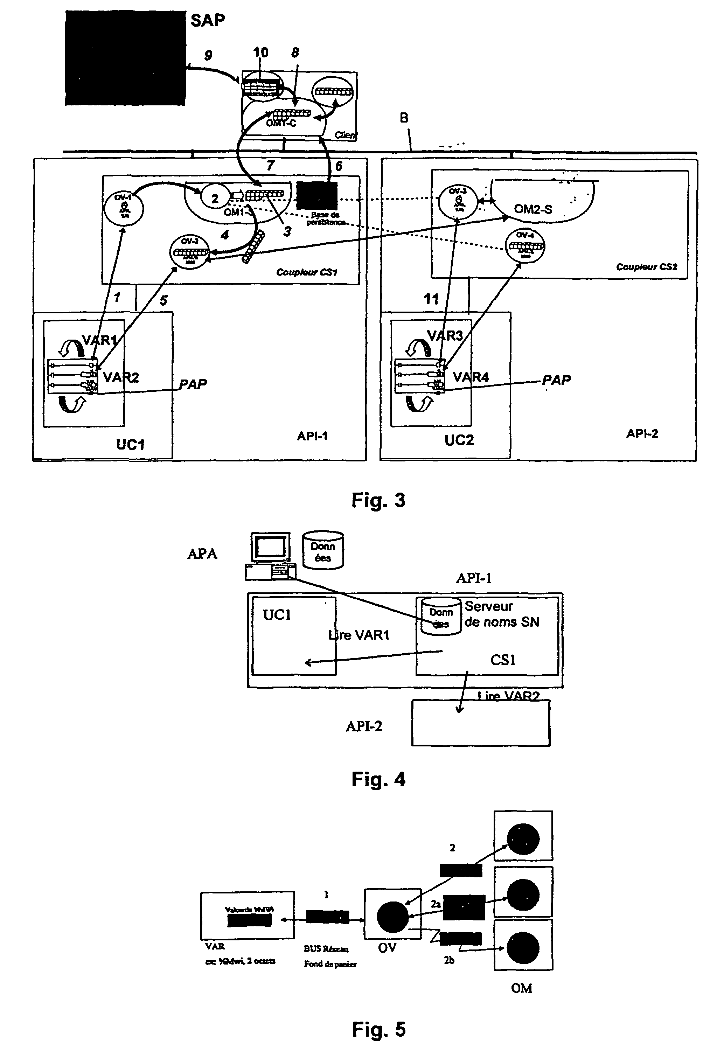

En se référant aux figures 3 et 5, l'objet OV-1 lit ou écrit par une opération repérée 1 la valeur d'une variable automate VAR1. L'objet OM1-S peut lire ou écrire par une opération repérée 2 ladite valeur sous la même forme que celle manipulée par la variable automate. Il peut aussi lire ou écrire la valeur, par une opération 2a de la figure 5, sous une autre forme que celle de la variable automate. Dans ce cas, bien que la valeur ne change pas, la forme (ou aussi la dynamique) change : par exemple la valeur au lieu d'être codée sur deux octets sera codée sur quatre octets. L'objet OM1-S peut aussi recevoir une valeur pertinente sous la forme d'un événement.

A chaque objet lié à une variable automate OV est attribué un nom symbolique unique qui est celui de la variable automate manipulée par lui. Le nom symbolique et l'adresse associée (appelés aussi repère) sont sauvegardés dans un serveur de noms SN implémenté dans le coupleur CS1. Les noms symboliques et adresses sont mis à jour automatiquement, soit en cas de modification du nom d'une variable automate soit en cas de modification de l'adresse de la variable automate.

Chaque objet dit "manufacturier" est constitué d'un objet tel que OM1-S, localisé sur le coupleur serveur CS1 et d'un objet image OM1-C localisé sur un poste client tel que P,C,M ou SAP. Il génère, à partir des valeurs des variables automates fournies par un objet OV ou par un objet OM une information de type «manufacturier » c'est à dire une information destinée par exemple au système d'information de l'usine. Un tel objet OM peut échanger, avec plusieurs automates programmables industriels.

L'information 3 de niveau manufacturier peut par exemple être une alarme générée par une machine de production, une donnée métier (par exemple le nombre de voitures blanches ou le nombre de bouteilles), un message à distance via courrier électronique, une information de connexion automate/serveur SAP, une information de diagnostic système, une information de gestion d'alarmes, un message d'alarme en fonction de valeurs prises par certaines variables automate ou une information de gestion de base de données relationnelles ou une information de gestion d'archivage d'événements sur base de données relationnelles, une information gérant l'affichage d'une vue partielle de machine.

A chaque objet "manufacturier" OM est attribué un nom symbolique unique stocké dans le serveur de noms SN et adapté à une exploitation sur le réseau.

L'objet client OM1-C est le "proxy" ou image de l'objet serveur OM1-S. La localisation de cet objet image OM1-C dépend de son utilisation. Lorsque l'objet OM1-C est inutilisé, il est stocké dans la base de persistance BP du coupleur serveur CS1. Lorsque l'objet OM1-C est utilisé il est exécuté sur une machine cliente du coupleur serveur CS1, après déchargement, via le réseau, depuis la base de persistance BP. Cette base de persistance BP contient l'état des objets OV et OM (y compris pour ce dernier l'objet client OM-C).

Par défaut, l'objet client OM1-C offre une vue dite de gestion de l'objet OM (état de l'objet, position, paramètre). Il peut rendre des services optionnels dépendant de la nature même de l'objet OM, comme par exemple l'interface avec des systèmes extérieurs (SAP), une vue tabulaire d'alarme pour un service d'alarme, un synoptique, etc.... L'objet client OM-C peut prendre la forme de pages HTML, d' "applets", de "Beans" (composant logiciel Java) et ou d'autres composants logiciels.

Les objets manufacturiers OM délivrent des données pertinentes sous forme d'événements (modèle producteur/consommateur) et assurent le maintien de la cohérence des noms d'objets manipulés. C'est le coupleur serveur CS1 qui maintient la base de noms, les autres logiciels étant connectés à ce serveur. Par exemple, en se référant à la figure 4, un atelier de programmation automate APA envoie la liste des modifications au serveur de noms SN à chaque fois qu'une modification du programme automate modifie une variable automate liée à un objet OV.

La modification de la configuration du coupleur CS1 par le réseau sans effet sur la partie contrôle commande de l'automate.

Le fonctionnement va maintenant être expliqué :

Si l'on se réfère à la figure 3, les objets OV-1 et OV-2 reçoivent des informations 1 et 5 concernant des variables automates de l'unité centrale UC1. Ces objets OV-1 et OV-2 délivrent une information à la partie serveur OM1-S de l'objet manufacturier. De plus, cet objet OM1-S peut recevoir des informations des objets OV-3 et OV-4 d'un autre automate API-2. La partie du serveur OM1-S de l'objet manufacturier génère une information de type manufacturier 3.

L'objet serveur OM1-S transmet l'information 3 de type manufacturier par un échange référencé 7 à l'objet client OM1-C. L'objet OMS-1 transmet une information de synchronisation à l'unité centrale UC1.

Un poste client tel que P, C, M ou SAP transfère via un navigateur ou d'autres moyens par un échange référencé 6, via le réseau B, la partie cliente de l'objet OM1-C. Cette partie cliente de l'objet OM1-C est stockée sur un poste client soit ponctuellement, (cas d'une connexion du type navigateur Web par exemple), soit de façon permanente sur un serveur SAP par exemple.

Les logiciels 10 d'une application extérieure exécutées sur le poste client reçoivent par un échange 8 l'information de type manufacturier.

Le serveur SAP est interrogé par l'objet OM ou le serveur SAP renvoie les données demandées par l'OM.

## Revendications

1. Système d'automatisme distribué comprenant un automate programmable (API-1) équipé d'une unité centrale (UC1) capable d'exécuter un programme en langage d'automation et d'un coupleur (CS1) pouvant communiquer grâce à une fonction serveur avec les équipements associés (P, C, M, SAP) sous le protocole TCP/IP et pourvu d'une mémoire de masse (MS) contenant des objets logiciels dits "à variables automates" (OV) qui gèrent l'accès aux variables automates (VAR), **caractérisé par le fait qu'**il comporte des objets logiciels dits "manufacturiers" (OM) transformant les informations des objets (OV) à variables automates en informations de type manufacturier exploitables par les équipements associés (P, SAP, C, M), chacun de ces objets (OM) étant constitué d'un objet serveur (OM1-S) localisé sur le coupleur serveur (CS1) et d'un objet client (OM1-C) qui est l'image de l'objet serveur, l'objet client étant localisé sur une pluralité de stations clientes (P, C, M ou SAP).

2. Système d'automatisme selon la revendication 1, **caractérisé par le fait qu'**à chaque objet lié à une variable automate et à chaque objet manufacturier est attribué un nom symbolique unique, le coupleur serveur (CS1) comportant un serveur de noms gérant lesdits noms symboliques uniques attribués à chaque objet "variable automate" (OV) et à chaque objet "manufacturier" (OM).

3. Système d'automatisme distribué selon la revendication 1 ou 2, **caractérisé par le fait que** le coupleur serveur (CS1) supporte un système d'exploitation temps réel JAVA apte à permettre la connexion sous TCP/IP.

4. Système d'automatisme selon l'une quelconque des revendications précédentes, **caractérisé par le fait qu'**il comporte dans le coupleur serveur une base de persistance (BP) permettant de stocker les objets clients (OM1-C) inutilisés et l'état des objets liés aux variables automates (OV) et des objets serveurs (OM1-S) et objets clients (OM1-C).

5. Système d'automatisme selon l'une quelconque des revendications précédentes, **caractérisé par le fait qu'**il est connecté à une pluralité d'automates programmables (API-2, API-3, API-4).

6. Système d'automatisme selon l'une quelconque des revendications précédentes, **caractérisé par le fait que** les objets manufacturiers clients (OM1-C) sont stockés sur un serveur SAP.

7. Système d'automatisme selon l'une quelconque des revendications précédentes, **caractérisé par le fait que** le coupleur serveur (CS1) supporte un serveur HTML.

## Patentansprüche

1. Verteiltes Automatisierungssystem mit einem programmierbaren Automaten (AP-1), der mit einer Zentraleinheit (UC1), die ein Programm in der Automatisierungssprache ausführen kann, und mit einem Koppler (CS1) ausgestattet ist, der mit Hilfe einer Server-Funktion mit den zugeordneten Geräten (P, C, M, SAP) unter dem Protokoll TCP/IP kommunizieren kann und mit einem Massespeicher (MS) versehen ist, der so genannte "Softwareobjekte mit Automaten-Variablen" (OV) enthält, die den Zugriff zu den Automaten-Variablen (VAR) verwalten, **dadurch gekennzeichnet, dass** es so genannte "Hersteller-Softwareobjekte" (OM) enthält, die die Informationen der Objekte (OV) mit Automaten-Variablen in Informationen vom Hersteller-Typ umwandeln, die von den zugeordneten Geräten (P, SAP, C, M) ausgewertet werden können, wobei jedes dieser Objekte (OM) aus einem auf dem Server-Koppler (CS1) lokalisierten Server-Objekt (OM1-S) und aus einem Kunden-Objekt (OM1-C) besteht, das das Bild des Server-Objekts ist, wobei das Server-Objekt auf mehreren Kunden-Stationen (P, C, M oder SAP) lokalisiert ist.

2. Automatisierungssystem nach Anspruch 1, **dadurch gekennzeichnet, dass** jedem mit einer Automaten-Variablen verbundenen Objekt und jedem Hersteller-Objekt ein eindeutiger symbolischer Name zugewiesen wird, wobei der Koppler-Server (CS1) einen Namensserver enthält, der die jedem Objekt mit Automaten-Variablen (OV) und jedem Hersteller-Objekt (OM) zugewiesenen eindeutigen symbolischen Namen verwaltet.

3. Verteiltes Automatisierungssystem nach Anspruch 1 oder 2, **dadurch gekennzeichnet, dass** der Koppler-Server (CS1) ein Echtzeit-Betriebssystem JAVA unterstützt, das in der Lage ist, die Verbindung unter TCP/IP zu erlauben.

4. Automatisierungssystem nach einem der vorhergehenden Ansprüche, **dadurch gekennzeichnet, dass** es im Koppler-Server eine Persistenz-Datenbank (BP) enthält, die es ermöglicht, die nicht verwendeten Kunden-Objekte (OM1-C) und den Zustand der mit den Automaten-Variablen (OV) verbundenen Objekte und der Server-Objekte (OM1-S) und Kunden-Objekte (OM1-C) zu speichern.

5. Automatisierungssystem nach einem der vorhergehenden Ansprüche, **dadurch gekennzeichnet, dass** es mit mehreren programmierbaren Automaten (API-2, API-3, API-4) verbunden ist.

6. Automatisierungssystem nach einem der vorhergehenden Ansprüche, **dadurch gekennzeichnet, dass** die Hersteller-Kunden-Objekte (OM1-C) in einem SAP-Server gespeichert sind.

7. Automatisierungssystem nach einem der vorhergehenden Ansprüche, **dadurch gekennzeichnet, dass** der Koppler-Server (CS1) einen HTML-Server unterstützt.

## Claims

1. Distributed automation system comprising a programmable automaton (API-1) equipped with a central unit (UC1) capable of executing a program in an automation language and with a coupler (CS1) that can communicate by virtue of a server function with the associated equipment (P, C, M, SAP) under the TCP/IP protocol and provided with a mass memory (MS) containing so-called "automaton variable" software objects (OV) which manage the access to the automaton variables (VAR), **characterized in that** it comprises so-called "manufacturer" software objects (OM) transforming the information of the automaton variable objects (OV) into information of manufacturer type that can be utilized by the associated equipment (P, SAP, C, M), each of these objects (OM) being constituted by a server object (OM1-S) located on the server coupler (CS1) and by a client object (OM1-C) which is the image of the server object, the client object being located on a plurality of client stations (P, C, M or SAP).

2. Automation system according to Claim 1, **characterized in that** to each object related to an automaton variable and to each manufacturer object is allocated a unique symbolic name, the server coupler (CS1) comprising a names server managing the said unique symbolic names allocated to each "automaton variable" object (OV) and to each "manufacturer" object (OM).

3. Automation system according to Claim 1 or 2, **characterized in that** the server coupler (CS1) supports a JAVA real-time operating system suitable for allowing connection under TCP/IP.

4. Automation system according to any one of the preceding claims, **characterized in that** it comprises in the server coupler a persistence base (BP) making it possible to store the unused client objects (OM1-C) and the state of the objects related to the automaton variables (OV) and of the server objects (OM1-S) and client objects (OM1-C).

5. Automation system according to any one of the preceding claims, **characterized in that** it is connected to a plurality of programmable automata (API-2, API-3, API-4).

6. Automation system according to any one of the preceding claims, **characterized in that** the client manufacturer objects (OM1-C) are stored on an SAP server.

7. Automation system according to any one of the preceding claims, **characterized in that** the server coupler (CS1) supports an HTML server.
